# EUROPÄISCHE PATENTSCHRIFT

(11) **EP 2 453 263 B1**
(45) Veröffentlichungstag und Bekanntmachung des Hinweises auf die Patenterteilung: **14.10.2015**
(21) Anmeldenummer: 11185221.6
(22) Anmeldetag: 14.10.2011
(51) Int. Cl.: G01T 1/20, G01T 1/02

(54) **Hybride organische Fotodiode**
Hybrid organic photodiodes
Photodiode organique hybride

(30) Priorität: 11.11.2010 DE 102010043749
(43) Veröffentlichungstag der Anmeldung: 16.05.2012
(73) Patentinhaber: Siemens Aktiengesellschaft, 80333 München (DE)
(72) Erfinder: Rauch, Tobias, 82256 Fürstenfeldbruck (DE); Hayden, Oliver, 91074 Herzogenaurach (DE); Sramek, Maria, 91058 Erlangen (DE); Tedde, Sandro Francesco, 91058 Erlangen (DE); Schulz, Reiner Franz, 91077 Dormitz (DE)

(56) Entgegenhaltungen:
- WO-A1-2009/156419
- DE-A1- 10 313 602
- DE-A1-102006 039 785
- US-A1- 2007 272 872
- US-A1- 2010 074 396

## Beschreibung

Die vorliegende Erfindung betrifft Röntgendetektoren auf Basis indirekter Röntgenkonversion.

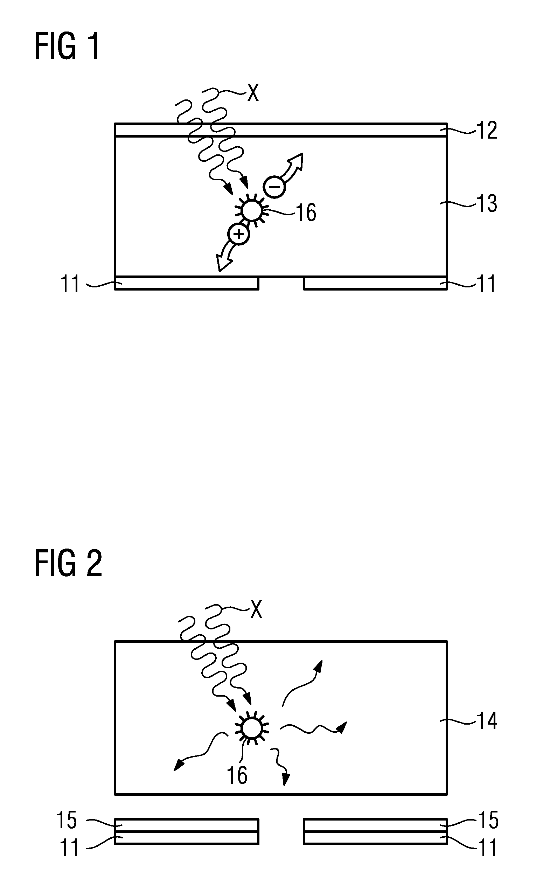

Im Bereich der Röntgendetektoren wird grundsätzlich danach unterschieden, ob der Röntgendetektor auf direkter oder auf indirekter Röntgenkonversion basiert. Beide Formen der Röntgendetektion sind in den Figuren 1 und 2 dargestellt und durch die Beschreibung der Figuren detailliert beschrieben.

Bei der direkten Röntgenkonversion wird die Röntgenstrahlung in einem Material absorbiert und mit deren Energie ein Elektron-Loch-Paar erzeugt. Das erzeugte Elektron-Loch-Paar kann elektronisch ausgelesen werden. Als Material kommt dafür beispielsweise amorphes Selen zum Einsatz. Auch Siliziumdioden werden zur direkten Röntgenkonversion verwendet. Bei der direkten Röntgenkonversion in einem Halbleiter kommt es auf eine gewisse Schichtdicke an, um einen für eine Detektion ausreichend hohen Anteil der Strahlung zu absorbieren. Siliziumdioden für die direkte Röntgenkonversion weisen Bauteildicken von ungefähr 1 cm auf. Für direkte Röntgenkonversion in amorphem Selen werden Schichten von bis zu 1 mm Dicke verwendet. Besonders nachteilig an Selen als Absorber ist dessen hohe Toxizität.

Für die indirekte Röntgenkonversion kommen bekannterweise Kombinationen aus einer Szintillatorschicht und einem Fotodetektor zum Einsatz. Dabei liegt die spektrale Empfindlichkeit des Fotodetektors in dem Wellenlängenbereich der Fluoreszenzemission der Szintillatorschicht, die durch Röntgenkonversion erzeugt wird. Die Szintillatorschichten umfassen Materialien wie z.B. Cäsiumjodid oder Gadoliniumschwefeloxid. Da Szintillatoren aus Cäsiumjodid höchst hygroskopisch sind, ist deren Einsatz in Kombination mit Fotodetektoren stets mit baulichem Aufwand, z.B. für eine Feuchteschutzverkapselung, verbunden und nachteilig für die Lebensdauer des Röntgendetektors.

Neben den beiden grundsätzlich möglichen Röntgenkonversionsformen muss im Bereich der Röntgendetektion auch nach dem Einsatzfeld unterschieden werden. Im Einsatzfeld der Röntgenbildgebung, wie sie beispielsweise im Medizinbereich Einsatz findet, werden kostengünstige und großflächige Lösungen angestrebt. Dabei kommt es auf eine hohe örtliche Auflösung für die Bildgebung an. Dafür werden bisher entweder direkte Röntgenkonverter eingesetzt, die jedoch nachteilig mit hohen Bauteiltiefen aufwarten und daher energetisch ineffizient hohe Betriebsspannungen im kV-Bereich benötigen. Oder es kommt eine Szintillatorschicht auf einem Fotodetektorarray zum Einsatz, welches nachteilig aus einer Vielzahl an pixelierten Fotodetektoren aufgebaut sein muss, um die gewünschte örtliche Auflösung zu gewährleisten.

Daneben finden Röntgendetektoren in der Röntgendosisleistungsmessung Einsatz. Die Röntgendosis wird in Röntgengeräten im medizinischen Bereich überwacht sowie auch in der Industrie und Sicherheitstechnik in sogenannten Dosimetern gemessen. Für die Röntgendosismessung ist eine effiziente Wandlung der absorbierten Röntgenstrahlung in ein nutzbares Signal von Bedeutung. Die Signale sollen ausreichend hoch und rauschfrei sein, um eine genaue Röntgendosis zu bestimmen. Insbesondere für den Einsatz von Röntgendosiskontrollgeräten in Kombination mit einer Röntgenbildgebung ist eine geringe Absorption der Röntgenstrahlung von Bedeutung. D.h. aus nur wenig absorbierter Röntgenstrahlung muss ein eindeutiges Signal generiert werden. Dies ist notwendig um keine Schatten auf dem Röntgenbild zu erzeugen. Besonders aber ist die geringe Absorption bei der Dosismessung nötig, um für ein deutliches Röntgenbild die Röntgenbelastung, beispielsweise für einen Patienten, möglichst gering zu halten. Bisher kommen zur Kontrolle der Röntgendosisleistung Ionisationskammern oder beispielsweise dicke Siliziumfotodioden zum Einsatz.

Die US 2007/0272872 A1 beschreibt einen Röntgendetektor mit einem Fotodetektor und Szintillatoren. Dabei können die Szintillatoren in die Fotodetektoren eingebettet sein. Die Fotodetektoren umfassen einen Halbleiterübergang.

Des Weiteren beschreibt die DE 10 2006 039785 A1 einen Fotodetektor, der in einem Röntgenkontrollsystem verwendet werden kann. Der Fotodetektor umfasst ein organisches Halbleitersystem, das ein treffendes Licht detektiert. Bei Röntgensystemen wird die Röntgenstrahlung in Kombination mit einem Szintillator in sichtbares Licht gewandelt, das in der Fotodiode elektrische Ladung erzeugt. Dabei kann die fotoleitfähige organische Schicht als Bulk-Heterojunktion ausgebildet sein.

In der DE10313602A1 wird eine Vorrichtung zur Messung einer Röntgenstrahlungsdosis beschrieben, die eine auf einem folienartigen Träger angeordnete Absorptionsstruktur aus übereinander angeordneten Dünnfilmschichten mit einer Dünnfilm-Diodenstruktur aufweist. Diese Diodenstruktur umfasst zwei Filmelektroden und dazwischen eine fotoaktive Halbleiterschicht, insbesondere aus einer Mischung aus organischem Donator und organischem Akzeptor. Hierbei kann die Halbleiter-Filmschicht direkt eingebrachte Szintillator-Nanopartikel umfassen.

Nachteilig an den bisher bekannten Röntgendetektoren ist, dass diese für einen jeweils stark eingeschränkten Nutzungsbereich geeignet sind. Die unterschiedlichen Funktionsweisen zur Röntgendetektion sind nicht vorteilhaft miteinander kombinierbar. Außerdem weisen alle bisher bekannten Röntgendetektoren hohe Bauteiltiefen auf.

Es ist Aufgabe der vorliegenden Erfindung, einen Röntgendetektor bereitzustellen, der gleichermaßen zur Röntgenbildgebung sowie auch zur Röntgendosismessung herangezogen werden kann. Darüber hinaus ist es eine Aufgabe der vorliegenden Erfindung eine Anordnung dieses Röntgendetektors mit einem Röntgengerät bereitzustellen, sowie ein Verfahren zu dessen Herstellung anzugeben.

Die Aufgabe wird gelöst durch einen Röntgendetektor gemäß Anspruch 1 und durch eine Anordnung des Röntgendetektors mit einem Röntgengerät gemäß Anspruch 7, sowie durch ein Verfahren gemäß Anspruch 10. Vorteilhafte Ausgestaltungen der Erfindung sind Gegenstand der Unteransprüche.

Der erfindungsgemäße Röntgendetektor ist für die Bildgebung und/oder für die Dosisleistungsmessung ausgestaltet. Der Röntgendetektor umfasst eine hybride fotoaktive Schicht zwischen einer ersten Elektrode und einem Substrat. Die erste Elektrode ist insbesondere die Kathode der Fotodiode. Die hybride fotoaktive Schicht umfasst eine Mehrzahl an Szintillatoren sowie eine Bulk-Heterojunction. Die fotoaktive Schicht wird als hybrid bezeichnet, da sie mit den Szintillatoren und der Bulk-Heterojunction zwei unterschiedliche Konvertermaterialien umfasst. Diese sind jedoch nicht wie bisher bekannt in getrennten Schichten angeordnet, sondern zu einer einzelnen fotoaktiven Schicht verbunden. Die Szintillatoren dienen zur Konversion der Röntgenstrahlung in Szintillationsstrahlung, insbesondere Fluoreszenzstrahlung im sichtbaren Wellenlängenbereich. Die Bulk-Heterojunction ist ausgestaltet in eben diesem Wellenlängenbereich der Szintillationsstrahlung zu absorbieren und dadurch Elektron-Loch-Paare zu bilden. Die hybride fotoaktive Schicht, die Szintillatoren und eine Bulk-Heterojunction aufweist, ist daher ausgestaltet indirekte Röntgenkonversion vorzunehmen. Der Röntgendetektor ist darüber hinaus so ausgestaltet, die Elektron-Loch-Paare, die in der Bulk-Heterojunction generiert werden, elektrisch zu detektieren. Der erfindungsgemäße Röntgendetektor hat den Vorteil mit einer einzelnen hybriden fotoaktiven Schicht zwischen einer ersten Elektrode und einem Substrat mit einer geringen Bauteiltiefe auszukommen, sowie einen sehr einfachen Aufbau aufzuweisen. Der erfindungsgemäße Röntgendetektor kommt darüber hinaus ohne hochtoxisches Selen aus. Die hybride fotoaktive Schicht ist gleichermaßen geeignet eine Bildgebung oder eine Dosisleistungsmessung zu gewährleisten.

Als Bulk-Heterojunction werden in der organischen Elektronik Heteroübergänge bezeichnet, die sich über das gesamte Schichtvolumen (bulk) erstrecken. Mindestens zwei Materialien, die sich in ihrer Eigenschaft als Loch- oder Elektronleiter unterscheiden (hetero), werden so zu einer Schicht zusammengefügt, dass sich im gesamten Schichtvolumen Grenzflächen der beiden Materialien ausbilden. In einer Bulk-Heterojunction erfolgt die Trennung der Ladungsträger, d.h. der Elektron-Loch-Paare, an eben diesen Grenzflächen.

Gemäß der Erfindung weist der Röntgendetektor eine ALD-Schicht auf. Die ALD-Schicht ist eine zweite Elektrode des Röntgendetektors. Die zweite Elektrode ist insbesondere die Anode der Fotodiode.

Als ALD-Schicht wird eine Schicht bezeichnet, die durch einen ALD-Prozess hergestellt wurde. ALD steht für Atomic Layer Deposition, ein bekanntes Abscheideverfahren. Mittels ALD können Schichten mit charakteristischen Eigenschaften erzeugt werden. Eine ALD-Schicht ist insbesondere auf eine Atomlage in ihrer Dicke homogen. Insbesondere ist eine ALD-Schicht isotrop bezüglich ihrer elektrischen, optischen oder mechanischen Eigenschaften.

Der Einsatz einer ALD-Schicht als zweiter Elektrode ist besonders vorteilhaft da die ALD-Schicht gleichermaßen als feuchte Schutzschicht dienen kann und somit eine Verkapselung zum Feuchteschutz ersetzt oder dieser durch die ALD-Schichtunterstützt werden kann.

In einer vorteilhaften Ausgestaltung der Erfindung umfasst die Bulk-Heterojunction organische Halbleitermaterialien, die löslich sind und durch einen Sprühprozess abscheidbar sind. Diese Eigenschaften sind vorteilhaft für die Absorptionseigenschaft sowie die Eignung zur Trennung von Elektron-Loch-Paaren in der Bulk-Heterojunction, denn nur bei Eignung für eine bestimmte Abscheidetechnik sind effiziente Bulk-Heterojunctions herstellbar.

In einer weiteren vorteilhaften Ausgestaltung der Erfindung machen die Szintillatoren einen Volumenanteil zwischen 10 Vol.-% und 70 Vol.-% der hybriden fotoaktiven Schicht aus, insbesondere zwischen 10 Vol.-% und 50 Vol.-%. Ein derartiger Volumenanteil an Szintillatoren in der hybriden fotoaktiven Schicht wirkt sich positiv auf die energetische Umsetzung der Röntgenstrahlung in elektrische Signale aus. Insbesondere kann in diesem Intervall eine Anpassung vorgenommen werden für einen Einsatz zur Dosismessung oder zur Bildgebung. Für die Dosismessung ist eine geringere Absorption, für die Bildgebung eine höhere Absorption der Röntgenstrahlung vorteilhaft.

In einer weiteren vorteilhaften Ausgestaltung der Erfindung weist die hybride fotoaktive Schicht eine homogene Schichtdicke auf, und diese Schichtdicke beträgt zwischen 0,5 µm und 500 µm, insbesondere zwischen 0,5 µm und 100 µm. Die Gesamtschichtdicke der hybriden fotoaktiven Schicht beträgt insbesondere 500 µm. Die Gesamtschichtdicke der hybriden fotoaktiven Schicht kann auch 100 µm oder nur 10 µm betragen. Auch Gesamtschichtdicken von 1 µm sind realisierbar. Die dünne Schichtdicke wirkt sich dementsprechend auf die gesamte Bauteildicke vorteilhaft aus. Insbesondere kann durch eine Variation der Schichtdicke der hybriden fotoaktiven Schicht der Röntgendetektor auf den Einsatz zur Dosisleistungsmessung mit einer dünneren hybriden fotoaktiven Schicht oder für den Einsatz zur Röntgenbildgebung mit einer dickeren hybriden fotoaktiven Schicht ausgestaltet werden.

Insbesondere ist die ALD-Schicht zwischen den Szintillatoren und der Bulk-Heterojunction angeordnet. Beispielsweise sind dazu Szintillatornadeln oder Szintillatorpartikel in einem ALD-Prozess beschichtet worden, bevor die Bulk-Heterojunction darauf abgeschieden wurde. In diesem Aufbau wirkt die ALD-Schicht besonders effektiv als Feuchtigkeitsbarriere um die Szintillatoren herum.

Das Einbringen einer ALD-Schicht als eine der Elektroden, insbesondere als Anode, hat also den zusätzlichen Vorteil, dass die davon umgebenen Szintillatoren einen Feuchteschutz erfahren. Die dichte ALD-Schicht vermindert die Feuchteaufnahme der hybriden fotoaktiven Schicht und wirkt wie eine Verkapselung. Zusätzlich kann um das gesamte Bauteil mit hybrider fotoaktiver Schicht Substrat und Elektroden herum eine weitere Verkapselung vorgenommen werden. Hierfür ist insbesondere eine Dünnfilmverkapselung von Vorteil. Die hybride Ausgestaltung des Röntgendetektors bietet damit den Vorteil, dass keine getrennte Verkapselung von organischer fotoaktiver Schicht und Szintillatorschicht notwendig ist. Reaktive Top-Elektroden, die z.B. Kalzium enthalten, können insbesondere durch ALD abgeschiedene Aluminium-Top-Elektroden ersetzt werden. Somit können sehr langzeitstabile Röntgendetektoren geschaffen werden.

In einer weiteren vorteilhaften Ausgestaltung der Erfindung ist die ALD-Schicht zumindest teilweise durchlässig für elektromagnetische Strahlung im zu detektierenden Wellenlängenbereich der Röntgenstrahlung oder für Licht im Wellenlängenbereich der Szintillationsstrahlung der Szintillatoren.

In einer weiteren vorteilhaften Ausgestaltung der Erfindung ist der Brechungsindex der ALD-Schicht genau in dem Wellenlängenbereich höher als der Brechungsindex des Szintillatormaterials, in dem die Fluoreszenzstrahlung liegt, die im Szintillator anregbar ist. Das hat den Vorteil, dass die den Szintillator treffende Röntgenstrahlung im Szintillator eine Fluoreszenzstrahlung anregt, die dann in dem Szintillator wie in einem Lichtwellenleiter an der ALD-Schicht total reflektiert wird und so zielgerichtet an einem vorgebbaren Ausgangspunkt des Lichtwellenleiters austritt. Ein derartiger Ausgangspunkt ist eine Lücke in der ALD-Schicht, die in nadelförmigen Szintillatoren vorzugsweise an der Nadelspitze angeordnet ist.

In der erfindungsgemäßen Anordnung mit einem Röntgengerät weist das Röntgengerät einen Sensor auf, der ein Dreifeld- oder ein Fünffeldsensor zur Kontrolle der applizierten Röntgendosis ist. Dieser Dreifeld- oder Fünffeldsensor weist wiederum erfindungsgemäße Röntgendetektoren auf. Insbesondere ist der Detektor zur Dosiskontrolle im Strahlengang der Röntgenstrahlung zwischen der Röntgenröhre, d.h. der Röntgenstrahlungsquelle, und der Bildgebungseinheit angeordnet. Eine derartige Anordnung mit einem Röntgengerät, welches zur Kontrolle der applizierten Röntgendosis einen erfindungsgemäßen Röntgendetektor verwendet, hat den Vorteil, dass der Röntgendetektor eine geringe Bauteiltiefe und geringe Absorption aufweist und dementsprechend sich der Sensor nicht nachteilig auf die Röntgenbildgebung auswirkt. Darüber hinaus gewährleistet der erfindungsgemäße Röntgendetektor eine effiziente Wandlung der absorbierten Röntgenenergie in ein detektierbares elektrisches Signal.

In einer vorteilhaften Ausgestaltung der Erfindung umfasst die Anordnung mit dem Röntgengerät einen Sensor, der eine Mehrzahl an Röntgendetektoren aufweist, die in einer zweidimensionalen Matrixanordnung angebracht sind. Die erfindungsgemäßen Röntgendetektoren haben den Vorteil aufgrund ihrer geringen Schichtdicke und dementsprechend geringen Absorption auch für den Zweck der Dosiskontrolle großflächig aufgetragen werden zu können. Demnach ist eine sehr exakte Dosismessung möglich. Für den Anwendungsbereich der Bildgebung wirkt sich ein entsprechender Röntgendetektor ebenso vorteilhaft aus. Durch die hybride fotoaktive Schicht können Röntgensensoren großflächig hergestellt werden und beispielsweise in einer Matrix strukturiert werden um eine Ortsauflösung zu gewährleisten.

Insbesondere weist die Anordnung mit dem Röntgengerät einen Sensor auf, der eine Standardgröße für Automatic Exposure Control Einheiten von 43 x 43 cm² aufweist. Dies hat den Vorteil, dass der neue erfindungsgemäße Sensor in allen herkömmlichen Röntgengeräten eingesetzt werden kann.

In dem Verfahren zur Herstellung eines erfindungsgemäßen Röntgendetektors wird eine Mehrzahl an Szintillatoren sowie eine Bulk-Heterojunction auf ein Substrat abgeschieden, wobei die Bulk-Heterojunction aus Lösung mittels eines Sprühprozesses abgeschieden wird. Dies hat den Vorteil, dass unterschiedliche organische Halbleitermaterialien, die nur in unterschiedlichen Lösemitteln gelöst werden können, gleichzeitig abgeschieden werden können, wodurch erst eine Bulk-Heterojunction erzeugt werden kann. Der Sprühprozess ist des Weiteren vorteilhaft für eine großflächige Abscheidung der Bulk-Heterojunction.

Gemäß der Erfindung umfasst das Verfahren einen zusätzlichen Prozessschritt zur Abscheidung einer ALD-Schicht. D.h. nach der Abscheidung der Szintillatoren auf dem Substrat werden diese durch einen ALD-Prozess beschichtet, wobei insbesondere durch den ALD-Prozess eine Elektrode abgeschieden wird. Danach wird die Bulk-Heterojunction auf die von der ALD-Schicht beschichteten Szintillatoren abgeschieden. Dies hat den Vorteil, dass die Szintillatoren durch die ALD-Schicht eine zusätzliche Feuchteschutzschicht erhalten. Der ALD-Prozess ist dafür von Vorteil, da er eine isotrope Abscheidung auch bei schwierigen Aspektverhältnissen der zu beschichtenden Szintillatoren gewährleistet.

In einer vorteilhaften Ausgestaltung der Erfindung werden in dem Verfahren die Szintillatoren aus einer Suspension durch einen Sprühprozess abgeschieden. Dabei werden die Szintillatoren insbesondere durch einen Co-Sprühprozess gleichzeitig mit der Bulk-Heterojunction abgeschieden. Bei dem Co-Sprühprozess wird die Suspension mit den Szintillatoren sowie die Lösung der Bulk-Heterojunction-Materialien auf ein gemeinsames Substrat abgeschieden und somit eine erfindungsgemäße hybride fotoaktive Schicht ausgebildet. Dies hat den Vorteil, dass ein erfindungsgemäßer Röntgendetektor in einem einzelnen Depositionsschritt hergestellt werden kann.

In einer alternativen vorteilhaften Ausgestaltung der Erfindung wird in dem Verfahren die Bulk-Heterojunction aus Lösung durch einen Sprühprozess auf die bereits auf dem Substrat abgeschiedenen Szintillatoren aufgebracht. Dies hat den Vorteil, dass beispielsweise auch Szintillatoren, die nicht durch einen Sprühprozess abscheidbar sind, in erfindungsgemäßer Weise in eine Bulk-Heterojunction so einbringbar sind, dass eine hybride fotoaktive Schicht entsteht.

Die erfindungsgemäßen Röntgendetektoren für indirekte Röntgenkonversion weisen demnach eine organische Fotodiode basierend auf einer Bulk-Heterojunction auf, in die Szintillatormaterialien eingebettet sind. Die verwendeten organischen Halbleitermaterialien für die Bulk-Heterojunction zeichnen sich dadurch aus, dass sie sehr niedrige Dunkelströme aufweisen. Im Gegensatz zu polymeren Fotoleitern, deren Leitfähigkeit unter Lichteinstrahlung erhöht werden kann, unterscheiden sich die Dunkelströme und die Ströme bei Belichtung der eingesetzten fotoaktiven Materialien um mehrere Größenordnungen. Dies ist nötig bzw. vorteilhaft für den Einsatz zur Röntgenbildgebung, um einen deutlichen Kontrast zwischen belichteten und dunklen Bereichen zu gewährleisten. Polymere Fotoleiter würden sich nicht für eine Röntgenbildgebung eignen, da hier Gradienten zwischen bestrahlten und dunklen Bereichen entstehen würden. Des Weiteren sind die eingesetzten organischen Halbleitermaterialien in dem Wellenlängenbereich der Fluoreszenzstrahlung besonders stark absorbierend, wodurch eine effektive Umsetzung der Lichtenergie in elektrische Ladung gewährleistet ist.

Als Szintillatoren kommen dabei z.B. Cäsiumjodid oder Gadoliniumschwefeloxid in Frage. Cäsiumjodid ist ein Vertreter der nadelförmig gewachsenen Szintillatoren, die insbesondere auf einem Substrat aufgewachsen werden. Gadoliniumschwefeloxid kann partikelförmig vorliegen. Mit Szintillatornadeln können vorteilhaft Röntgendetektoren für die Röntgenbildgebung geschaffen werden. Die Szintillatorpartikel haben den Vorteil, dass deren isotrope Fluoreszenzemission im Bulk der organischen Halbleiterschicht absorbiert werden kann. Während die Partikel alternativ durch einen Sprühprozess auch ein Co-Sprühen mit der Bulklösung abscheidbar sind oder auch zeitlich vor der Abscheidung der Bulk-Heterojunction auf dem Substrat aufgebracht werden können, werden die Szintillatornadeln in jedem Fall zunächst auf dem Substrat aufgewachsen, bevor die Bulk-Heterojunction abgeschieden wird.

Das Bauteil des Röntgendetektors, insbesondere die hybride fotoaktive Schicht aus Szintillatoren und Bulk-Heterojunction unterscheidet sich jedoch in jedem Fall dadurch von bisherigen Röntgendetektoren, dass kein Stacking, d.h. Aufeinanderschichten von Szintillatorschicht und Fotodetektionsschicht vorliegt, sondern beide Konverter in einer einzelnen Schicht enthalten sind. Insbesondere sind die Szintillatoren, ob Nadeln oder Partikel, direkt in die Bulk-Heterojunction eingebettet, so dass die Szintillatoren direkt von der Bulk-Heterojunction umgeben sind.

Stehen die Szintillatoren nicht in direktem Kontakt mit der Bulk-Heterojunction werden sie maximal durch eine dünne ALD-Schicht von der Bulk-Heterojunction getrennt. Diese nur wenige Atomlagen dicke Schicht kann eine der Elektroden des Röntgendetektors darstellen. Insbesondere ist die Schicht auch ein Feuchtigkeitsschutz für die Szintillatoren und/oder der Organik der Bulk-Heterojunction.

Bei Bevorzugung einer isotropen Fluoreszenzemission aus den Szintillatoren, z.B. für die Anwendung der Dosisleistungsmessung, ist die ALD-Schicht vorzugsweise transparent im Wellenlängenbereich der Fluoreszenzstrahlung der Szintillatoren, die durch die eintreffende Röntgenstrahlung angeregt wird.

Für den Einsatz als Röntgenbildgeber werden vorzugsweise Szintillatornadeln als Wellenleiter eingesetzt und mit einer ALD-Schicht umgeben, deren Brechungsindex so gewählt wird, dass die in den Szintillatoren entstehende Fluoreszenzstrahlung an der Oberfläche der Szintillatoren total reflektiert und in den Szintillatoren wie in einem Wellenleiter geleitet wird. Dadurch kann die Fluoreszenzstrahlung zu einem bestimmten Ausgangspunkt aus dem Szintillator geleitet werden, insbesondere zu den Nadelspitzen der Szintillatoren. Diese sind dazu nicht von einer ALD-Schicht bedeckt. Bei einem derartigen Aufbau der hybriden fotoaktiven Schicht wird nicht die gesamte Bulk-Heterojunction von Fluoreszenzstrahlung erfasst, sondern überwiegend der fotoaktive Bereich zwischen den Szintillatorspitzen und der Kathode. Dazu ist vorteilhafterweise ein Mindestabstand zwischen den Szintillatoren und der Kathode zwischen 50 und 200 nm gewählt. Derartige hybride fotoaktive Schichten gewährleisten eine effiziente Umsetzung von Röntgenstrahlung in elektrische Signalladungen bei sehr hoher örtlicher Auflösung.

Der Röntgendetektor umfasst also neben der hybriden fotoaktiven Schicht zumindest eine erste Elektrode und ein Substrat. Das Substrat kann insbesondere ein transparentes Substrat, z.B. ein Glassubstrat sein oder auch eine Aktiv-Matrix-Backplane. Auf dem Substrat kann eine zweite Elektrode, z.B. die Anode des Fotodetektors aufgebracht sein. Die Anode kann wiederum transparent z.B. ein TCO, ein transparentes leitfähiges Oxid sein, das beispielsweise über einen ALD-Prozess abgeschieden werden kann. Die Anode kann mehrere Anodenpixel umfassen oder durchgängig sein. Zweckdienlicherweise ist eine der Elektroden die Anode oder die Kathode aus mehreren Pixeln. Beispielsweise kann für den Fall der eingebetteten Szintillatorpartikel die hybride fotoaktive Schicht zwischen der Anode und der Kathode angeordnet sein. Es können auch zwischen Anode und Kathode noch Interlayer angeordnet sein, die beispielsweise der Ladungstrennung dienen. Die Anode kann aber auch zwischen den Szintillatoren und der Bulk-Heterojunction angeordnet sein, wenn diese z.B. in Form einer ALD-Schicht über die Szintillatornadeln aufgetragen wurde. Dementsprechend ist dann nicht die Anode pixeliert, sondern die Kathode. Generell ist auch ein inverser Aufbau möglich, dass auf das Substrat zunächst die Kathode aufgebracht wird und auf die hybride fotoaktive Schicht die Anode aufgebracht wird. Vorteilhaft ist jedoch der Aufbau mit einer Top-Kathode, die beispielsweise aus einem Metall sein kann. Dafür kommen Aluminium, Kalzium-Silber- oder Kalzium-Gold-Elektroden in Frage. Derartige Metallelektroden können beispielsweise durch Verdampfungsprozesse abgeschieden werden. Bei thermischen Verdampfungsprozessen kann durch Schattenmasken eine Strukturierung der Top-Elektrode vorgenommen werden. Alternativ kann die Top-Elektrode auch durch einen ALD-Prozess isotrop aufgetragen werden, was beispielsweise mit Aluminium möglich ist. Für eine Strukturierung der Anode auf dem Substrat kann auch ein Lithographieprozess herangezogen werden.

Das Substrat für die hybride fotoaktive Schicht kann insbesondere auch flexibel ausgestaltet sein.

Bei einem Aufbau, bei dem die Szintillatoren zeitlich vor der Bulk-Heterojunction abgeschieden werden, kann die Bulk-Heterojunction auch durch einen Tauchprozess aus Lösung hergestellt werden, der noch eine Alternative zu einem Sprühprozess darstellt.

Ausführungsformen der vorliegenden Erfindung werden in exemplarischer Weise mit Bezug auf die Figuren 1 bis 12 beschrieben.
- Figur 1: zeigt einen Röntgendetektor auf Basis direkter Röntgenkonversion.
- Figur 2: zeigt einen Röntgendetektor auf Basis indirekter Röntgenkonversion.
- Figur 3: zeigt einen Röntgendetektor mit hybrider fotoaktiver Schicht.
- Figur 4: zeigt einen Röntgendetektor mit pixelierter Kathode.
- Figur 5: zeigt eine alternative Ausführungsform des Röntgendetektors.
- Figur 6: zeigt einen Röntgendetektor mit pixelierter Anode.
- Figur 7: zeigt eine schematische Darstellung des Herstellungsprozesses eines Röntgendetektors mit zwei Sprühköpfen.
- Figur 8: zeigt einen Dreifeldsensor.
- Figur 9: zeigt einen Fünffeldsensor.
- Figur 10: zeigt einen Multifeldsensor.
- Figur 11: zeigt ein Röntgengerät mit Röntgendetektoren zur Bildgebung und Dosiskontrolle.
- Figur 12: zeigt ein Messdiagramm mit Stromantworten verschiedener Röntgendetektoren.

Die Figur 1 zeigt einen Röntgendetektor für direkte Röntgenkonversion nach dem bekannten Stand der Technik. Ein Material 13, das zur Absorption und direkten Konversion von Röntgenstrahlung X geeignet ist, ist zwischen einer Pixelelektrode 11 und einer Top-Elektrode 12 angeordnet. Die Pixelierung der Elektrode 11 wird zur Ortsauflösung vorgenommen. Die Top-Elektrode 12 ist für Röntgenstrahlung X durchlässig. Die Röntgenstrahlung X wird in dem Material 13 absorbiert unter Bildung von Elektron-Loch-Paaren. In der Figur 1 ist schematisch das Konversionszentrum 16 gezeigt, in dem die Umwandlung der Strahlungsenergie der Röntgenstrahlung X in elektrische Energie erfolgt, in dem die Energie der Strahlung auf ein Elektron übergeht und dieses in einen höheren energetischen Zustand gehoben wird. Das so gebildete Elektron-Loch-Paar kann in einem angelegten Feld, das über die Elektroden 11, 12 an die Materialschicht 13 angelegt werden kann, getrennt werden. D.h. der Röntgendetektor befindet sich im Betrieb unter einer Vorspannung und bei Absorption von Röntgenstrahlung X kann ein Stromfluss I detektiert werden.

Figur 2 zeigt einen Röntgendetektor für indirekte Röntgenkonversion nach dem Stand der Technik. Dieser Röntgendetektor für die indirekte Röntgenkonversion ist zweiteilig aufgebaut. Zum einen umfasst der Röntgendetektor einer Szintillationsschicht 14 in der die Konversion von Röntgenstrahlung X in Fluoreszenzstrahlung erfolgt. Auch in diesem Fall ist schematisch ein Konversionszentrum 16 gezeigt, in dem die Umwandlung der Energie der Röntgenstrahlung in Lichtenergie passiert. Der zweite Teil des Röntgendetektors umfasst Fotodetektoren 15, insbesondere Fotodioden 15, und wiederum pixelierte Elektroden 11. Diese Fotodioden 15 sind geeignet die Fluoreszenzstrahlung der Szintillatorschicht 14 zu detektieren.

Bekannte Szintillatormaterialien, die für eine Szintillatorschicht verwendet werden können, sind z.B. Gadoliniumschwefeloxid oder Cäsiumjodid. Typischerweise beträgt die Schichtdicke einer solchen Szintillationsschicht 0,1 mm bis 1 mm. Die Schicht zur direkten Röntgenkonversion 13 kann eine Siliziumfotodiode sein mit einer hohen Schichtdicke von mehr als 1 cm oder es kann amorphes Selen als direkter Röntgenkonverter eingesetzt werden. Die Selenschichten für direkte Röntgenkonversion betragen üblicherweise bis zu 1 mm Schichtdicke. Die direkten Röntgenkonverter werden z.B. in Sperrrichtung mit Spannungen im Bereich von einigen kV vorgespannt.

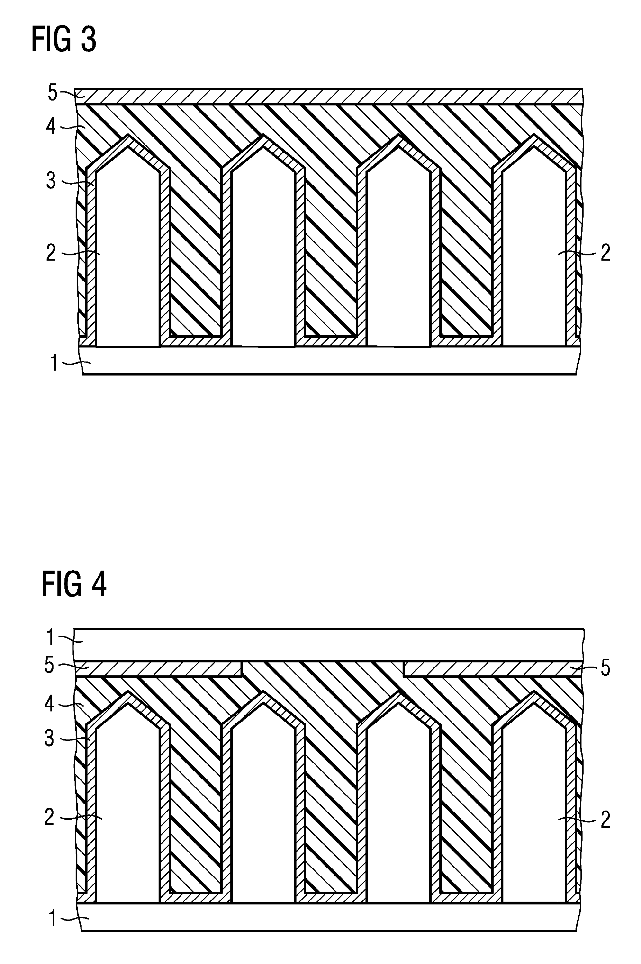

Die Figuren 3, 4 und 5 zeigen jeweils einen Röntgendetektor mit hybrider fotoaktiver Schicht, wobei die Szintillatoren 2 Szintillatornadeln sind, die auf einem Substrat 1 aufgewachsen sind. Die Szintillatornadeln 2 sind beispielsweise Cäsiumjodid-Szintillatoren. Das Substrat 1 kann ein Glassubstrat sein. Über die auf dem Glassubstrat 1 aufgewachsenen Szintillatornadeln 2 wird eine ALD-Schicht 3 abgeschieden. Insbesondere ist die ALD-Schicht 3 ein transparentes leitfähiges Oxid (TCO). Diese ALD-Schicht 3 kann somit die Funktion der Anode der hybriden Fotodiode erfüllen. Nach der ALD-Schicht 3 werden die Zwischenräume der Szintillatornadeln 2 auf dem Substrat 1 mit einer Bulk-Heterojunction 4 aufgefüllt und die Nadeln 2 damit überdeckt, so dass eine dicke hybride fotoaktive Schicht entsteht, in die die Szintillatornadeln 2 vollständig eingebettet sind. Die hybride fotoaktive Schicht wird von einer Kathode 5 bedeckt. Diese kann wiederum durch einen ALD-Prozess aufgebracht werden. Beispielsweise wird dafür Aluminium verwendet. Alternativ kann die Kathode 5 auch durch thermisches Verdampfen von einem Metall oder mehreren Metallen erfolgen. In Figur 3 ist die Kathode 5 großflächig auf die fotoaktive Schicht aufgebracht. Die Aufbringung der Anode 3 durch einen ALD-Prozess auf die Szintillatornadeln 2 hat den Vorteil, dass eine isotrope Abscheidung auch bei hohem Aspektverhältnis der Szintillatornadel 2 erfolgt.

In Figur 4 ist ebenfalls ein Substrat 1 mit aufgewachsenen Szintillatornadeln 2 gezeigt, die von einer ALD-Schicht 3 bedeckt sind. Auch hier erfolgt die Abscheidung einer Bulk-Heterojunction 4 in die Nadelzwischenräume und über die Szintillatornadeln 2, so dass diese vollständig in die Bulk-Heterojunction 4 eingebettet sind und mit der Bulk-Heterojunction 4 eine hybride fotoaktive Schicht bilden. Die Top-Elektrode 5, die die Kathode der hybriden Fotodiode darstellt, ist in diesem Fall pixeliert dargestellt, d.h. die Kathode 5 ist unterbrochen und es kann somit eine Ortsauflösung erfolgen. Oberhalb der Kathode 5 ist ein weiteres Substrat 1 gezeigt. Dieses kann Teil einer Verkapselung des Röntgendetektors sein. Insbesondere kann die hybride fotoaktive Schicht vollständig verkapselt sein, um sie gegen das Eindringen von Feuchtigkeit zu schützen, das sich nachteilig auf die organischen Materialien und auch nachteilig auf hygroskopisches Szintillatormaterial auswirken könnte.

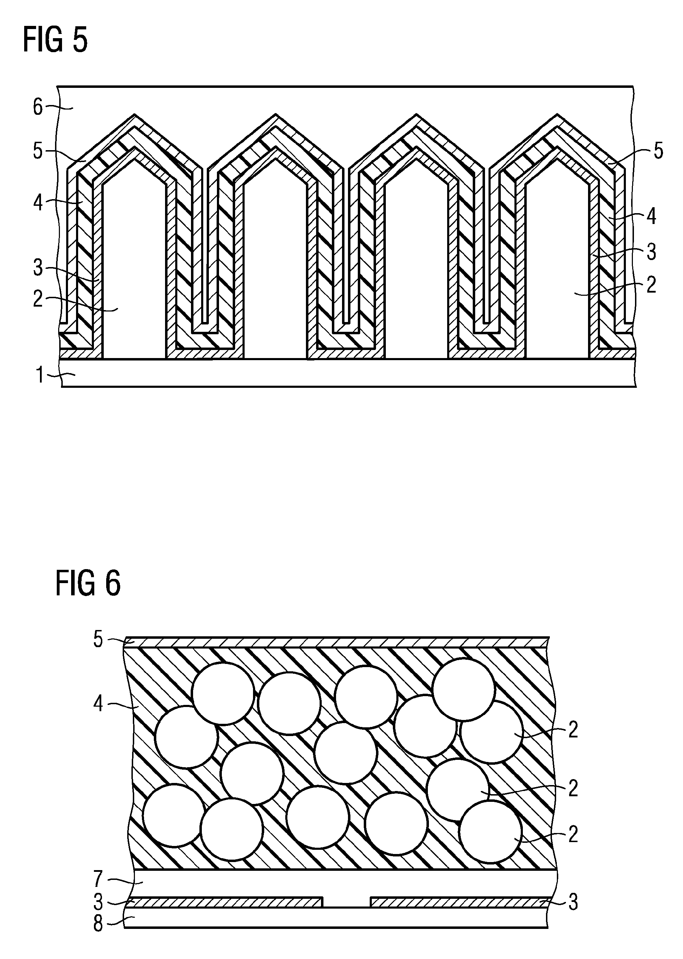

Figur 5 zeigt eine alternative Ausführungsform des Röntgendetektors bei dem die Szintillatornadeln 2 wieder auf ein Substrat 1 aufgewachsen sind und beide Elektroden 3, 5 mittels ALD-Prozess isotrop abgeschieden wurden. Die Anode 3 ist direkt auf die Szintillatornadeln 2 abgeschieden. Die Kathode 5 ist auf die Bulk-Heterojunction 4 abgeschieden. Die Bulk-Heterojunction 4 ist in diesem Fall nur als relativ dünne Schicht über die Nadeln 2 abgeschieden. Insbesondere beträgt die Bulk-Heterojunction 4 weniger als 100 nm Schichtdicke. Die Elektrodenschichten 3,5 sowie die Bulk-Heterojunction 4 bilden demnach noch die Nadelstruktur ab. Die Nadelzwischenräume werden dann mit einem Füllmaterial 6 aufgefüllt und die Szintillatorspitzen damit abgedeckt. Als Füllmaterial 6 kann beispielsweise ein Epoxid verwendet werden. Dieses dient primär der Stabilisierung und dem Feuchteschutz des hybriden Fotodetektors.

In den gezeigten Röntgendetektoren mit Szintillatornadeln 2 ist die Anode 3 immer zwischen den Szintillatoren 2 und den Bulk-Heterojunction 4 angeordnet. Damit die Szintillationsstrahlung, die in den Szintillatoren 2 durch die eindringende Röntgenstrahlung X angeregt wird von der Bulk-Heterojunction 4 absorbiert werden kann, muss die Szintillationsstrahlung durch die Anode 3 hindurch in die Bulk-Heterojunction 4 austreten können. Dazu wird z.B. ein transparentes leitfähiges Oxid (TCO) als Anode 3 verwendet. Dieses kann insbesondere auch durch einen ALD-Prozess abgeschieden werden. Die Transparenz muss vor allem in dem Wellenlängenbereich gewährleistet sein, in dem die Szintillatoren 2 Strahlung emittieren. In diesem Fall kann eine isotrope Emission in das fotoaktive organische Halbleitermaterial 4 erfolgen. Und der Röntgendetektor kann zur Dosisleistungsmessung herangezogen werden.

Um ein Röntgenbild zu erzeugen, d.h. zum Zwecke des Röntgenimaging, muss eine örtliche Auflösung der eintreffenden Röntgenstrahlung erfolgen. Dazu werden pixelierte Elektroden 3, 5 verwendet, in diesem Fall bevorzugt eine pixelierte Kathode 5, wie in Figur 4 gezeigt. Besonders vorteilhaft ist dazu eine ALD-deponierte Anode 3, die einen Brechungsindex aufweist, der bewirkt, dass die Szintillationsstrahlung an der Oberfläche der Szintillatoren 2 total reflektiert und in den Szintillatornadeln 2 wie in einem Lichtwellenleiter geleitet wird. Ist dann eine Unterbrechung der ALD-Schicht, vorzugsweise an den Nadelspitzen vorgesehen, tritt die Fluoreszenzstrahlung gebündelt an dieser Stelle aus und gewährleistet eine hohe Ortsauflösung des Röntgendetektors.

Demnach kann durch Einstellung des Brechungsindex der ALD-Anode 3 auf den Szintillatornadeln 2 eine Begünstigung für das Röntgenimaging oder für die Dosisleistungsmessung erfolgen. Der übrige Aufbau des Röntgendetektors bleibt gleich.

Die Figur 6 zeigt eine hybride Fotodiode mit eingebetteten Szintillatorpartikeln 2 in die Bulk-Heterojunction 4. Diese hybride fotoaktive Schicht ist zwischen einer Kathode 5 und einer einem Substrat 8 mit pixelierten Anoden 3 angeordnet. Zwischen den pixelierten Anoden 3 und der hybriden fotoaktiven Schicht kann sich noch eine Zwischenschicht 7 befinden. Im Allgemeinen können Zwischenschichten 7 oder sogenannte Interlayer 7 dazu herangezogen werden, den Ladungstransport zu den Elektroden 3, 5 hin zu begünstigen. Das Substrat 8 ist in diesem Fall eine Aktiv-Matrix-Backplane, über die die Pixelanoden 3 angesteuert und ausgelesen werden können. Ebenso wie für nadelförmige Szintillatoren 2 erfolgt die Konversion von Röntgenstrahlung X in Fluoreszenzstrahlung in den Szintillatoren 2. Die Fluoreszenzstrahlung wird in der Bulk-Heterojunction 4 absorbiert und in elektrische Energie umgewandelt. Die durch die Absorption der Fluoreszenzstrahlung erzeugten Elektron-Loch-Paare werden wie auch in Figur 1 gezeigt im angelegten Feld zwischen Anode 3 und Kathode 5 getrennt und detektiert. Im Fall der Szintillatorpartikel 2 erfolgt eine isotrope Emission der Fluoreszenzstrahlung in die Bulk-Heterojunction 4. Dies bewirkt eine effiziente Wandlung der Röntgenenergie in elektrische Signale. Die Schichtdicke der hybriden fotoaktiven Schicht mit der Bulk-Heterojunction 4 und den eingebetteten Szintillatoren 2 beträgt in etwa 100 µm, kann aber je nach Anwendungsbereich auch nur 10 µm betragen. Beispielsweise sind auch sehr dünne Schichtdicken der hybriden fotoaktiven Schicht von ungefähr 1 µm möglich. Die Strukturierung der Elektroden 3, 5 legt die aktive Fläche der hybriden Fotodioden fest. Die Pixelierung der Elektroden 3, 5, je nach dem ob auf dem Substrat 1, 8 oder auf der Bulk-Heterojunction 4, kann vorzugsweise über Schattenmasken oder lithographisch erfolgen. Die Strukturierung durch Schattenmasken ist vorteilhaft bei einem direkten Aufdampfvorgang der Top-Elektrode. Bei einem ALD-deponierten Oxid beispielsweise ist eine lithographische Strukturierung auf dem Substrat 1 möglich. Der Pixel-Pitch beträgt dabei vorzugsweise 50 µm. Die aktive Diodenfläche wird besonders für Dosisleistungsmessungen sehr groß gewählt und kann bis zum 10 cm² betragen.

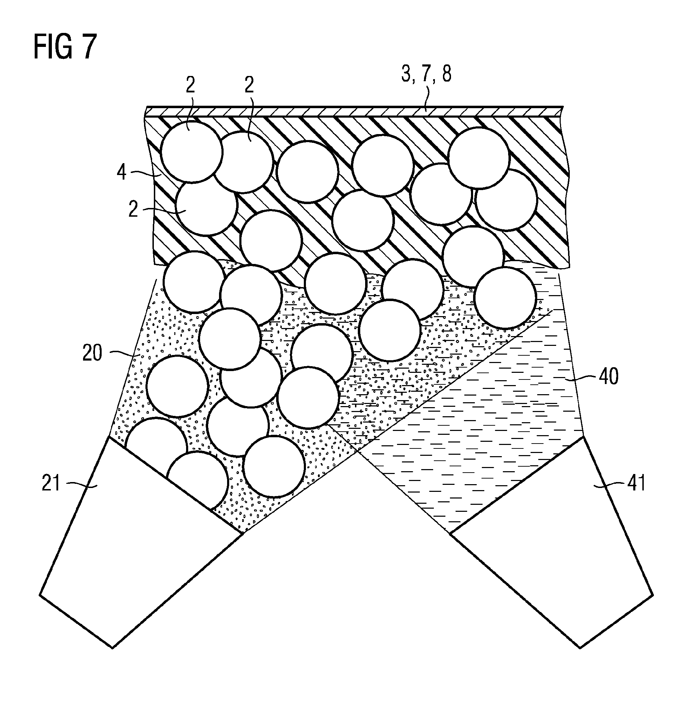

Die Figur 7 zeigt nun schematisch den Herstellungsprozess eines hybriden Fotodetektors mit partikulären Szintillatoren 2. Auf ein Substrat 3, 7, 8 wird die hybride fotoaktive Schicht in einem Ko-Sprühverfahren aufgebracht. D.h. die Bulk-Heterojunction (BHJ) 4 wird aus einer Lösung 40 gleichzeitig mit einer Suspension 20, die die Szintillatorpartikel 2 enthält, aufgesprüht. Dazu sind in der Figur 7 zwei Sprühköpfe 21, 41 gezeigt, die auf das gleiche Substrat 3, 7, 8 ausgerichtet sind. Über die Sprühdauer und die Zusammensetzung der Szintillator-Suspension 20 und der BHJ-Lösung 40 kann somit der Szintillatoranteil in der hybriden fotoaktiven Schicht eingestellt werden. Darüber hinaus kann die Schichtdicke der hybriden fotoaktiven Schicht gezielt eingestellt werden. Die aufgesprühten Schichtdicken betragen zwischen 0,5 und 100 µm. Vorteilhafte Anteile von Szintillatorpartikeln 2 in der Bulk-Heterojunction 4 liegen zwischen 10 Vol.-% und 50 Vol.-%. Im Gegensatz zu Depositionsmethoden aus dem Stand der Technik, bei dem Partikel direkt mit dem organischen Halbleiter vor dessen Deposition vermischt werden, wird in diesem Ko-Sprühverfahren der Szintillator diskret auf das Substrat aufgetragen.

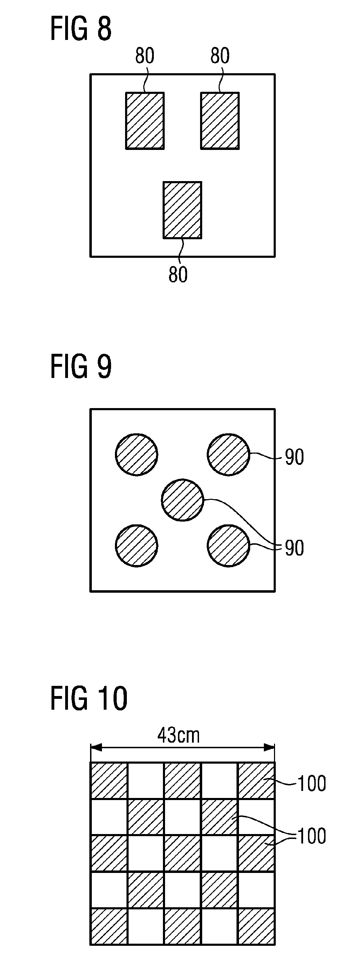

Die Figuren 8, 9 und 10 zeigen Sensoren mit einer Abmessung von 43 x 43 cm, wie sie in bestehende Röntgengeräte zur Dosisleistungsmessung der sogenannten Automatic Exposure Control (AEC) eingesetzt werden können. Üblicherweise werden dafür bisher Drei- oder Fünffeldsensoren, wie in Figur 8 und 9 gezeigt, eingesetzt. Die Dreifeldanordnung, wie in Figur 8 gezeigt, deckt den Lungen- und Mediastinumbereich ab, wie er in medizinischen Anwendungen von Röntgengeräten wichtig ist. Die schraffierten Flächen 80, 90 in den Figuren 8 und 9 stellen die Sensorflächen dar. In Figur 10 ist eine erfindungsgemäße Anordnung von Sensorflächen 100 gezeigt, wie sie besonders gut durch die erfindungsgemäßen Röntgendetektoren mit hybrider fotoaktiver Schicht realisiert werden können. Diese sind sehr dünn und großflächig abscheidbar. Somit kann eine Art Schachbrettmuster, d.h. eine Anordnung der Sensoren 100 in einer zweidimensionalen 5x5-Matrix erfolgen. Mit einem derartigen Sensor mit mehreren, z.B. 13 Sensorfeldern 100 kann sehr flexibel auf unterschiedlich zu untersuchende Objekte reagiert werden. Es können verschiedene Kombinationen der Sensorfelder 100 aktiv geschaltet und eingesetzt werden. Die Sensorfelder 100 zur Dosisleistungsmessung dürfen keine Schatten auf das Röntgenbild werfen.

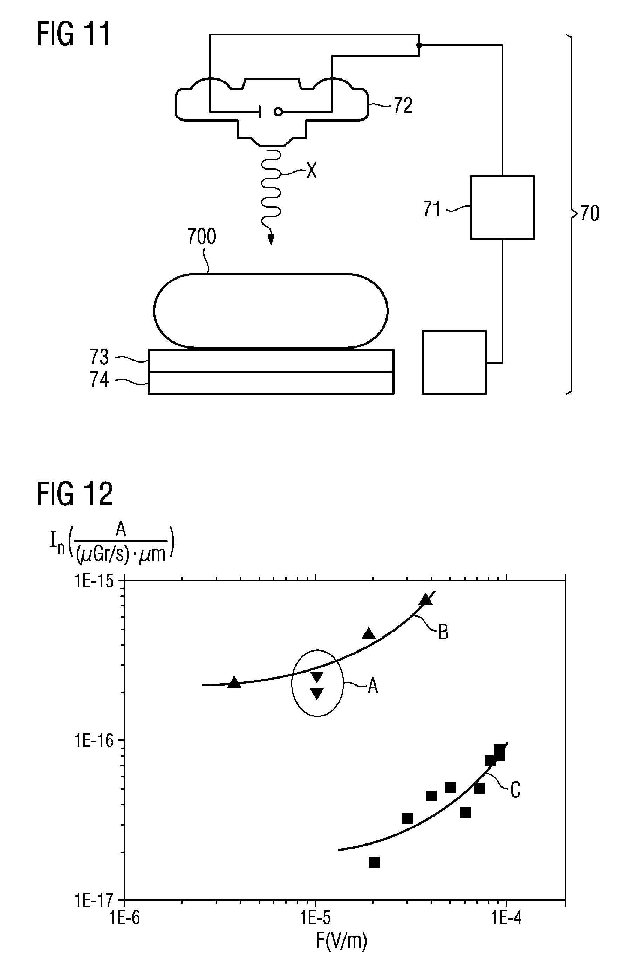

Die Figur 11 zeigt ein Röntgengerät 70 wie es zur Untersuchung von einem Untersuchungsobjekt 700 z.B. in der Medizin verwendet wird. Dazu wird das Untersuchungsobjekt 700 oberhalb der Röntgendetektoreinheit 73, 74 angebracht. Diese besteht aus einem Röntgendetektor zur Dosisleistungsmessung 73 und einem Röntgendetektor für die Bildgebung 74. Alternativ kann auch oberhalb des Untersuchungsobjektes 700 ein Röntgendetektor zur Dosisleistungsmessung angebracht sein. Die Röntgenröhre 72, in der die Röntgenstrahlung X erzeugt wird, ist so angeordnet, dass die Röntgenstrahlung X das Untersuchungsobjekt 700 durchdringt und danach auf die Röntgendetektoreinheit 73, 74 auftrifft. Des Weiteren ist eine Ansteuerung 71 der Röntgenröhre 72 gezeigt.

Dieses Bild eines Röntgengerätes zeigt, dass zwei Röntgendetektoren 73, 74 mit sehr unterschiedlichen Anforderungen an die Röntgenmessung notwendig sind. Dafür musste bisher auf sehr unterschiedliche Technologien für das Röntgenimaging z.B. über indirekte Konverter und für die Röntgendosisleistungsmessung z.B. auf Ionisationskammern zurückgegriffen werden. Mit dem erfindungsgemäßen hybriden Röntgendetektor, kann ein Röntgendetektor zur Dosisleistungsmessung genauso wie für Bildgebung hergestellt werden. Insbesondere ist für die Dosisleistungsmessung eine geringe Bauteiltiefe von Vorteil, um möglichst wenig Röntgenstrahlung zu absorbieren, da diese noch für die Bildgebung in dem zweiten Röntgendetektor 74 für das Imaging auftreffen soll. Für die Dosisleistungsmessung ist also besonders die effiziente Wandlung der Energie der Röntgenstrahlung X in Signalladungen von Bedeutung. Für das Röntgenimaging jedoch sollte die höchstmögliche Strahlung absorbiert werden. Dabei geht es immer um einen Trade-off zwischen Absorption und tatsächlicher Performance. D.h. die Quanteneffizienz und das dynamische Verhalten der Röntgendiode verschlechtern sind mit zunehmender Schichtdicke. Die Absorption der Röntgenstrahlung X in der hybriden fotoaktiven Schicht nimmt mit der Schichtdicke exponentiell zu. Für die Automatic Exposure Control Anwendungen sollte die Absorption gering sein. Dafür sind Schichtdicken zwischen 5 und 20 µm und ein Szintillatoranteil von 50 Vol.-% von Vorteil. Für das Röntgenimaging werden vorzugsweise Schichtdicken zwischen 100 µm und 1 mm verwendet. Für das Imaging sind Szintillatornadeln 2 mit einer ALD-Schichtummantelung 3 von Vorteil, durch die die Szintillatornadeln 2 als Lichtwellenleiter fungieren.

Die Figur 12 zeigt ein Diagramm, in dem die Effizienz der Wandlung der unterschiedlichen Röntgendetektoren dargestellt ist. Die Messergebnisse A und C sind jeweils einem Röntgendetektor auf Basis indirekter Konversion zuzuordnen, die Messergebnisse B einem Röntgendetektor auf Basis direkter Konversion. Als Maß für die Effizienz der Wandlung von Röntgenstrahlung X in eine Signalladung wird der gemessene Strom Iₙ angegeben, der normiert wurde auf die Dosisrate und auf die Schichtdicke des jeweiligen Röntgendetektors. Der Strom ist in Ampere angegeben. Die Dosisrate in Mikro-Gray pro Sekunde (µGr/s). Die Schichtdicke in Mikrometer. Dieser Wert wird gegen das angelegte Feld (V/m), d.h. die angelegte Spannung pro Schichtdicke aufgetragen. Als Röntgendetektor auf Basis direkter Konversion wurde ein organischer Röntgendetektor auf Basis einer Bulk-Heterojunction mit eingebetteten Blei-Selen-Quantenpunkten verwendet. Dessen Messergebnisse sind mit B im Diagramm gekennzeichnet. Die Quantenpunkte machen 50 Vol.-% der Konversionsschicht aus. Die Einbettung von Quantenpunkten, sogenannten Quantum dots, in ein organisches Halbleitermaterial basiert auf direkter Röntgenkonversion in den Quantenpunkten, wobei das organische Halbleitermaterial für die Abführung der erzeugten elektrischen Ladung zuständig ist. Die mit A bezeichneten Messpunkte sind einem zweiteiligen Röntgendetektor nach dem Stand der Technik wie in Figur 2 gezeigt, zuzuordnen. Dabei wurden als Fotodetektor organische Fotodioden verwendet und eine 1 mm dicke Cäsiumjodid-Szintillatorschicht. Die mit C bezeichnete Messung ist einem erfindungsgemäßen hybriden Röntgendetektor zuzuordnen mit einer hybriden fotoaktiven Schicht aus einer Bulk-Heterojunction 4 und eingebetteten Szintillatorpartikeln 2 aus Gadoliniumschwefeloxid. Diese wurden nach dem erfindungsgemäßen Ko-Sprühverfahren abgeschieden. Die hybride fotoaktive Schicht beträgt 10 µm. Die Gadoliniumschwefeloxidpartikel machen 50 Vol.-% der aktiven Schicht aus. Die Wandlungseffizienz kann über die Schichtdicke getuned werden. Die Bewertung der verschiedenen Röntgendetektoren erfolgt bei einer bekannten Dosisrate (µG/s).

Ein Unterschied zwischen den eingebetteten Quantenpunkten und den Szintillatorpartikeln 2 liegt in der Größe der Partikel. Die Szintillatorpartikel 2 betragen im Durchmesser zwischen 1 µm und 4 µm. Die Quantenpunkte betragen im Durchmesser zwischen 3 nm und 6 nm. Daher unterscheidet sich das Konversionsprinzip. In den Quantenpunkten wird die Röntgenstrahlung direkt in elektrische Ladung konvertiert und das organische Halbleitermaterial dient als Träger für die Quantenpunkte und als leitfähiges Material zum Abtransport der Ladung. In den Szintillatorpartikeln wird die Röntgenstrahlung in Szintillationsstrahlung, die insbesondere im sichtbaren Licht liegt, umgewandelt und wird über ein organisches fotoaktives Material in Ladung umgesetzt.

## Patentansprüche

1. Röntgendetektor (73, 74) für Bildgebung und/oder Dosisleistungsmessung mit einer hybriden fotoaktiven Schicht zwischen einer ersten Elektrode (5) und einem Substrat (1), wobei die hybride fotoaktive Schicht eine Mehrzahl an Szintillatoren (2) und ein Halbleitermaterial aufweist und ausgestaltet ist, indirekte Röntgenkonversion vorzunehmen, indem das Halbleitermaterial ausgestaltet ist, Licht im Wellenlängenbereich der Szintillationsstrahlung der Szintillatoren (2) unter Bildung von Elektron-Loch-Paaren zu absorbieren, wobei der Röntgendetektor ausgestaltet ist, die Elektron-Loch-Paare elektrisch zu detektieren,
und wobei das Halbleitermaterial eine Bulk-Heterojunction (4) ist,
**dadurch gekennzeichnet, dass** der Röntgendetektor eine Atomic Layer Deposition (ALD) Schicht aufweist, wobei die ALD-Schicht eine zweite Elektrode (3) ist.

2. Röntgendetektor (73, 74) nach Anspruch 1, wobei die Bulk-Heterojunction organische Halbleitermaterialien umfasst, die löslich sind und durch einen Sprühprozess abscheidbar sind.

3. Röntgendetektor (73, 74) nach Anspruch 1 oder 2, wobei die Szintillatoren (2) einen Volumenprozentanteil zwischen 10 Vol.-% und 70 Vol.-% der hybriden fotoaktiven Schicht ausmachen.

4. Röntgendetektor (73, 74) nach einem der Ansprüche 1 bis 3, wobei die hybride fotoaktive Schicht eine homogene Schichtdicke aufweist und diese zwischen 0,5 µm und 500 µm beträgt.

5. Röntgendetektor (73, 74) nach einem der Ansprüche 1 bis 4, wobei die ALD-Schicht zwischen den Szintillatoren (2) und der Bulk-Heterojunction (4) angeordnet ist.

6. Röntgendetektor (73, 74) nach einem der Ansprüche 1 bis 5, wobei die ALD-Schicht zumindest teilweise durchlässig ist für elektromagnetische Strahlung im zu detektierenden Wellenlängenbereich der Röntgenstrahlung oder für Licht im Wellenlängenbereich der Szintillationsstrahlung der Szintillatoren (2).

7. Anordnung mit einem Röntgengerät (73, 74), wobei das Röntgengerät einen Sensor aufweist, wobei der Sensor ein 3-Feld- oder ein 5-Feld-Sensor zur Kontrolle der applizierten Röntgendosis ist, wobei der 3-Feld- oder der 5-Feld-Sensor Röntgendetektoren (73, 74) nach einem der Ansprüche 1 bis 6 aufweist.

8. Anordnung mit einem Röntgengerät, wobei das Röntgengerät einen Sensor aufweist, wobei der Sensor eine Mehrzahl an Röntgendetektoren (73, 74) nach einem der Ansprüche 1 bis 6 aufweist und diese in einer 2-dimensionalen Matrix-Anordnung angebracht sind.

9. Anordnung nach einem der Ansprüche 7 oder 8, wobei der Sensor eine Standardgröße von 43 x 43 cm² für Automatic-Exposure-Control-Einheiten aufweist.

10. Verfahren zur Herstellung eines Röntgendetektors (73,74) gemäß Anspruch 1
in dem eine Mehrzahl an Szintillatoren (2) und ein Halbleitermaterial auf ein Substrat (1) abgeschieden werden, wobei das Halbleitermaterial aus Lösung (40) durch einen Sprühprozess abgeschieden wird,
und wobei
als Halbleitermaterial eine Bulk-Heterojunction (4) abgeschieden wird,
**dadurch gekennzeichnet, dass** die Mehrzahl an Szintillatoren (2) vor der Abscheidung der Bulk-Heterojunction (4) durch einen ALD-Prozess beschichtet werden, wobei insbesondere durch den ALD-Prozess eine Elektrode (3) abgeschieden wird.

11. Verfahren nach Anspruch 10, wobei die Szintillatoren (2) aus einer Suspension (20) durch einen Sprühprozess abgeschieden wird, wobei insbesondere durch einen Ko-Sprühprozess gleichzeitig die Szintillatoren (2) aus einer Suspension (20) und die Bulk-Heterojunction (4) aus Lösung (40) so auf das Substrat (1) abgeschieden werden, dass eine hybride fotoaktive Schicht ausgebildet wird.

12. Verfahren nach Anspruch 10, wobei die Bulk-Heterojunction (4) aus Lösung (40) durch einen Sprühprozess auf die Mehrzahl an Szintillatoren (2) abgeschieden wird.

## Claims

1. X-ray detector (73, 74) for the imaging and/or dose output measurement with a hybrid photoactive layer between a first electrode (5) and a substrate (1), wherein the hybrid photoactive layer comprises a plurality of scintillators (2) and a semiconductor material and is configured to perform indirect x-ray conversion by the semiconductor material being configured to absorb light in the wavelength range of the scintillator radiation of the scintillators (2) by forming electron-hole pairs, wherein the x-ray detector is configured to detect the electron-hole pairs electrically,
and wherein the semiconductor material is a bulk heterojunction (4),
**characterised in that** the x-ray detector comprises an atomic layer deposition (ALD) layer, wherein the ALD layer is a second electrode (3).

2. X-ray detector (73, 74) according to claim 1, wherein the bulk heterojunction includes organic semiconductor materials, which can be dissolved and can be separated using a spray process.

3. X-ray detector (73, 74) according to claim 1 or 2, wherein the scintillators (2) constitute a volume percentage between 10 vol/% and 70 vol/% of the hybrid photoactive layer.

4. X-ray detector (73, 74) according to one of claims 1 to 3, wherein the hybrid photoactive layer comprises a homogenous layer thickness and this amounts to between 0.5 µm and 500 µm.

5. X-ray detector (73, 74) according to one of claims 1 to 4, wherein the ALD layer is arranged between the scintillators (2) and the bulk heterojunction (4).

6. X-ray detector (73, 74) according to one of claims 1 to 5, wherein the ALD layer is at least partially transparent for electromagnetic radiation in the wavelength range of the x-ray radiation which is to be detected or for light in the wavelength range of the scintillation radiation of the scintillators (2).

7. Arrangement with an x-ray device (73, 74), wherein the x-ray device comprises a sensor, wherein the sensor is a 3-field or 5-field sensor for controlling the applied x-ray dose, wherein the 3-field or the 5-field sensor comprises x-ray detectors (73, 74) according to one of claims 1 to 6.

8. Arrangement with an x-ray device, wherein the x-ray device comprises a sensor, wherein the sensor comprises a plurality of x-ray detectors (73, 74) according to one of claims 1 to 6 and these are applied in a 2-dimensional matrix arrangement.

9. Arrangement according to one of claims 7 or 8, wherein the sensor comprises a standard size of 43 x 43 cm² for automatic exposure control units.

10. Method for producing an x-ray detector (73, 74) according to claim 1,
in which a plurality of scintillators (2) and a semiconductor material are separated on a substrate (1), wherein the semiconductor material is separated from the solution (40) by means of a spray process, and wherein a bulk heterojunction (4) is deposited as a semiconductor material,
**characterised in that** the plurality of scintillators (2) are coated by means of an ALD process prior to depositing the bulk heterojunction, wherein an electrode (3) is deposited in particular by means of the ALD process.

11. Method according to claim 10, wherein the scintillators (2) are separated from a suspension (20) by means of a spray process, wherein in particular by means of a co-spray process, the scintillators (2) and the bulk heterojunction (4) are at the same time separated from a suspension (20) and from the solution (40) respectively and thus deposited on the substrate (1) so that a hybrid photoactive layer is formed.

12. Method according to claim 10, wherein the bulk heterojunction (4) from the solution (40) is deposited onto the plurality of scintillators (2) by means of a spray process.

## Revendications

1. Détecteur ( 73, 74 ) de rayons X pour la production d'images et/ou pour la mesure du débit de dose, comprenant une couche hybride photoactive entre une première électrode ( 5 ) et un substrat ( 1 ), la couche hybride photoactive ayant une multiplicité de scintillateurs ( 2 ) et un matériau semi-conducteur étant conformée pour effectuer une conversion indirecte de rayons X, par le fait que le matériau semi-conducteur est conformé pour absorber de la lumière dans le domaine des longueurs d'ondes du rayonnement de scintillation des scintillateurs ( 2 ) avec formation de paires électron-trou, le détecteur de rayons X étant conformé pour détecter électriquement les paires électron-trou, et dans lequel le matériau semi-conducteur est une hétérojonction ( 4 ) bulk,
**caractérisé en ce que** le détecteur de rayons X a une couche de dépôt de couche atomique (DCA), la couche (DCA) étant une deuxième électrode ( 3 ).

2. Détecteur ( 73, 74 ) de rayons X suivant la revendication 1, dans lequel l'hétérojonction bulk comprend des matériaux semi-conducteurs organiques, qui sont solubles et qui peuvent être déposés par une opération de pulvérisation.

3. Détecteur ( 73, 74 ) de rayons X suivant la revendication 1 ou 2, dans lequel les scintillateurs ( 2 ) représentent une proportion en pourcentage en volume comprise entre 10 % en volume et 70 % en volume de la couche hybride photoactive.

4. Détecteur ( 73, 74 ) de rayons X suivant l'une des revendications 1 à 3, dans lequel la couche hybride photoactive a une épaisseur homogène et celle-ci est comprise entre 0,5 µm et 500 µm.

5. Détecteur ( 73, 74 ) de rayons X suivant l'une des revendications 1 à 4, dans lequel la couche DCA est disposée entre les scintillateurs ( 2 ) et l'hétérojonction ( 4 ) bulk.

6. Détecteur ( 73, 74 ) de rayons X suivant l'une des revendications 1 à 5, dans lequel la couche DCA est transparente au moins en partie au rayonnement électromagnétique dans le domaine des longueurs d'ondes à détecter du rayonnement X ou pour de la lumière dans le domaine des longueurs d'ondes du rayonnement de scintillation des scintillateurs ( 2 ).

7. Agencement comprenant un appareil ( 73, 74 ) à rayons X, l'appareil à rayons X comportant un capteur, le capteur étant un capteur à trois champs ou un capteur à cinq champs, pour le contrôle de la dose de rayons X appliquée, le capteur à trois champs ou à cinq champs ayant des détecteurs ( 73, 74 ) de rayons X suivant l'une des revendications 1 à 6.

8. Agencement ayant un appareil à rayons X, l'appareil de rayons X ayant un capteur, le capteur ayant une multiplicité de détecteurs ( 73, 74 ) de rayons X suivant l'une des revendications 1 à 6 et ceux-ci étant mis suivant un agencement matriciel en deux dimensions.

9. Agencement suivant l'une des revendications 7 ou 8, dans lequel le capteur a une dimension normalisée de 43x43 cm² pour des unités de commande automatiques de l'exposition.

10. Procédé de fabrication d'un détecteur ( 73, 74 ) de rayons X suivant la revendication 1,
dans lequel on dépose une multiplicité de scintillateurs ( 2 ) et un matériau semi-conducteur suir le substrat ( 1 ), le matériau semi-conducteur étant déposé à partir d'une solution ( 40 ) par une opération de pulvérisation, et dans lequel
on dépose comme matériau semi-conducteur une hétérojonction ( 4 ) bulk.
**caractérisé en ce que** l'on revêt la multiplicité de scintillateur ( 2 ) avant le dépôt de l'hétérojonction ( 4 ) bulk par une opération DCA, une électrode ( 3 ) étant déposée, notamment par le procédé DCA.

11. Procédé suivant la revendication 10, dans lequel on dépose les scintillateurs ( 2 ) à partir d'une suspension ( 20 ) par une opération de pulvérisation, en déposant notamment par opération de co-pulvérisation en même temps les scintillateurs ( 2 ) à partir d'une suspension ( 20 ) et l' hétéroj onction ( 4 ) bulk à partir d'une solution ( 40 ) sur le substrat ( 1 ) de manière à constituer une couche hybride photoactive.

12. Procédé suivant la revendication 10, dans lequel on dépose l'hétérojonction ( 4 ) bulk à partir d'une solution ( 40 ) par une opération de pulvérisation sur la multiplicité de scintillateurs ( 2 ).
